Europäisches Patentamt

European Patent Office

Office européen des brevets

(11) Veröffentlichungsnummer: **0 328 964**
**A2**

(12) **EUROPÄISCHE PATENTANMELDUNG**

(21) Anmeldenummer: 89101877.2

(51) Int. Cl.⁴: **C08L 81/02 , C08K 3/04 ,**
**H01B 1/24**

(22) Anmeldetag: 03.02.89

(30) Priorität: 13.02.88 DE 3804535
02.03.88 DE 3806664

(43) Veröffentlichungstag der Anmeldung:
23.08.89 Patentblatt 89/34

(84) Benannte Vertragsstaaten:
BE DE FR GB IT

(71) Anmelder: BAYER AG

D-5090 Leverkusen 1 Bayerwerk(DE)

(72) Erfinder: Dziurla, Heinz-Jürgen
Solinger Strasse 35
D-5090 Leverkusen 1(DE)
Erfinder: Kraft, Klaus, Dr.
Doerperhofstrasse 15
D-4150 Krefeld 1(DE)
Erfinder: Reinking, Klaus, Dr.
Robert-Stolz-Strasse 16 b
D-5632 Wermelskirchen 1(DE)
Erfinder: Wehnert, Wolfgang, Dr.
Bodelschwinghstrasse 14
D-4150 Krefeld(DE)

(54) Leitfähige, kohlenstoffhaltige Polyarylensulfidmischungen.

(57) Die Erfindung betrifft leitfähige Abmischungen aus Polyarylensulfiden, vorzugsweise Polyphenylensulfiden (PPS) mit Graphit und leitfähigem Ruß.

EP 0 328 964 A2

## Leitfähige, kohlenstoffhaltige Polyarylensulfidmischungen

Die Erfindung betrifft leitfähige Abmischungen aus Polyarylensulfiden, vorzugsweise Polyphenylensulfiden (PPS) mit Graphit und leitfähigem Ruß.

Polyarylensulfide und ihre Herstellung sind bekannt, z.B. US-PS 2 354 129, EP-OS 171 021.

Polyarylensulfide mit Füllstoffen, z.B. leitfähigem Ruß abzumischen ist ebenfalls bekannt (z.B. US-PS 3 354 129, JP-OS 161 960).

Nach der Lehre dieser Schriften sind Abmischungen von Polyarylensulfiden mit leitfähigem Ruß durch niedrige elektrische Widerstände ausgezeichnet.

So konnten an gespritzten Formkörpern spezifische Oberflächen- und Durchgangswiderstände von $10^3$ Ohm und $10^2$ Ohm•cm gemessen werden. Jedoch sind die so erhaltenen, verminderten elektrischen Widerstände für eine Vielzahl technischer Anwendungen nicht immer befriedigend.

Ein weiterer Nachteil derartiger Abmischungen ist, daß zur Herstellung von gespritzten Formkörpern aus diesen Abmischungen Entformungshilfen zugesetzt werden müssen. Durch diese Entformungshilfen ist es möglich, besonders dünnwandige oder komplizierte Formteile aus der Form zu lösen und eine für die spätere Anwendung akzeptable Oberflächenqualität zu erreichen.

Durch die Zugabe von Entformungshilfen können aber die mechanischen Eigenschaften, wie z.B. Zug- und Biegefestigkeit, Zähigkeit und Randfaserdehnung negativ beeinflußt werden.

Die technische Aufgabe, Abmischungen mit elektrischen Widerständen von beispielsweise kleiner 50 Ohm im Formteil bei gleichzeitigen guten mechanischen Eigenschaften, gutem Entformverhalten und guter Oberfläche herzustellen, ist daher so kaum zu lösen.

Es wurde nun gefunden, daß in Abmischungen von Polyarylensulfiden mit Kohlenstoff bei gleicher Gesamtkonzentration an Kohlenstoff wesentlich niedrigere elektrische Widerstände erreicht werden, wenn man als Kohlenstoff eine Mischung aus leitfähigem Ruß und Graphit einsetzt.

Gegenstand der Erfindung sind Abmischungen aus

a) 20 bis 92 Gew.-% Polyarylensulfiden, vorzugsweise PPS,

b) 4 bis 60 Gew.-% Leitruß und

c) 4 bis 60 Gew.-% Graphit

wobei die Summe der Gewichtsanteile der einzelnen Komponenten a) + b) + c) jeweils 100 Gew.-% ist und gegebenenfalls 0,01 bis 150 Gew.-% weiter üblicher Füll- und Zusatzstoffe, bezogen auf das Gewicht der Summe der Komponenten a + b + c.

Die spezifischen Oberflächen- bzw. Durchgangswiderstände von gespritzten Formkörpern aus erfindungsgemäßen Mischungen sind kleiner 50 Ohm bzw. 5 Ohm•cm.

Ein weiterer Vorteil der erfindungsgemäßen Amischungen ist, daß zur Herstellung gespritzter Formkörper aus diesen Abmischungen keine der üblichen, beispielsweise wachsartigen, Entformungshilfen zugegeben werden muß. Dadurch zeichnen sich Formkörper aus diesen Abmischungen durch ein besseres mechanischens Niveau aus.

Ein weiterer Vorteil der erfindungsgemäßen Abmischungen ist, daß die elektrischen Widerstände nicht durch die Migration von flüchtigen Entformungshilfen beeinflußt werden. Ein weiteres Abmischen mit nichtleitfähigen Polyarylensulfidabmischungen ist ebenfalls möglich.

Als Polyarylensulfide im Sinne der Erfindung kommen z.B. die durch Umsetzung von Dihalogenaromaten, insbesondere von z.B. p-Dichlorbenzol mit Schwefelspendern erhältlichen linearen und verzweigten Polykondensate in Betracht (z.B. US-PS 3 354 129, EP-OS 171 021).

Erfindungsgemäß geeignete Ruße sind Gasruße, Furnaceruße oder Flammruße mit mittleren Primärpartikelgrößen im Durchmesser von 5 bis 200 Nanometer (nm), vorzugsweise 10 bis 100 nm und insbesondere 15 bis 50 Nanometer.

Die BET-Oberflächen der erfindungsgemäßen geeigneten Ruße ist größer als 20 $m^2/g$. Ihre Dibutylphthalat (DBP)-Adsorption ist größer als 40 ml/100 g Ruß.

Sie haben einen mittleren Primärteilchendurchmesser von 5 bis 50 nm.

Erfindungsgemäß geeignete Ruße sind beispielsweise handelsübliche Leitruße wie z.B. Cabot Black Pearl 2000®, Cabot Vulcan XC 72® und 72 R®, Cabot Vulcan P®, Phillips XE 2®, Ketjen Black EC 600® usw.

Erfindungsgemäß geeignete Graphite sind Graphitpulver, Graphitfasern oder Graphitstäube, die beispielsweise als Elektrodengraphit in einem breiten Kornspektrum mit Partikeldurchmessern bis zu 5 mm handelsüblich sind. Bevorzugt werden Graphitpulver mit mittlerer Teilchengröße (Durchmesser) bis zu 1 mm, bevorzugt bis 0,5 mm verwendet.

Die Herstellung der erfindungsgemäßen Abmischungen aus Polyarylensulfiden, Ruß und Graphit und

2

gegebenenfalls anderen Füll- und Verstärkungsstoffen kann nach bekannten Compoundierverfahren auf Einschnecken- oder Mehrschneckenextrudern, z.B. ZSK-Maschinen oder geeigneten Knetern, z.B. BUSS-KO-Kneter, vorzugsweise auf Maschinen mit Entgasungseinrichtungen oder über geeigneten Agglomerationsverfahren, z.B. Pallmann- und/oder Condux-Agglomeratoren erfolgen.

Außerdem ist es möglich, diese Amischungen über die Pulvertechnologie (Pulvermischungen aus den einzelnen Komponenten - dosiert oder als Gemisch) herzustellen.

Pulvermischungen können z.B. auf Konusschnecken-Mischern, Taumel-Mischern, Turbinen-Mischern, Rhönrad-Mischern oder ähnlichen Mischern hergestellt werden.

Den erfindungsgemäßen Abmischungen können zur Verbesserung bestimmter Eigenschaften 0,01 bis 150 Gew.-% weiterer üblicher Füll- oder Verstärkungsstoffe, beispielsweise Aramidfasern, Glasfasern oder andere anorganische Verbindungen wie Talkum, Quarz, Glimmer, Kreide, Pigmente usw., die gegebenenfalls auf übliche Art vorbehandelt sein können, oder Mischungen aus diesen zugegeben werden. Ebenso können zur Verbesserung bestimmter Eigenschaften Stabilisatoren zugegeben werden.

Die erfindungsgemäßen Abmischungen können zu Formteilen, Halbzeugen, Folien oder Fasern verarbeitet werden. Die elektrischen Widerstände der Mischungen können beispielsweise durch weiteres Abmischen mit nichtleitfähigen Polyarylensulfidabmischungen eingestellt werden. Je nach den eingestellten elektrischen Widerständen können die so erhaltenen Formkörper erwünschte Eigenschaften zeigen und z.B. zur Abschirmung von elektromagnetischen Wellen oder Umwandlung des zugeführten Stromes in Wärme (Heizzwecke) eingesetzt werden.

Beispiele

Polyphenylensulfid hergestellt nach

| EP-OS 171 021 | 40,0 Gew.-% |
| Leitruß Cabot Vulcan XC 72® | 20,0 Gew.-% |
| Graphit (Fa. Merck) | 10,0 Gew.-% |
| Glasfaser | 30,0 Gew.-% |

Die beschriebenen Ausgangsstoffe wurden dosiert einem Doppelschneckenextruder mit Entgasungsvorrichtung zugegeben.

Die Temperatur während der Compoundierung lag bei 320 bis 360° C.

Am Ende des Compoundierschnittes wurde ein zylindrisches Granulat erhalten, das zu entsprechenden Formkörpern verarbeitet wurde, an denen folgende mechansiche und elektrische Kennwerte ermittelt wurden:

elektrische Kennwerte

| spezifischer Oberflächenwiderstand (nach DIN 53 596, VDE 0303 Teil 3, Potentialmethode) | 49,0 Ohm |
| spezifischer Durchgangswiderstand (nach DIN 53 596, VDE 0303 Teil 3, Potentialmethode) | 0,74 Ohm•cm |

mechanische Kennwerte

3

| Biegefestigkeit (DIN 53 452, ISO/R 178) | 165 N/mm² |
|---|---|
| Randfaserdehnung bei Höchstkraft | 1,2 % |
| Biege-E-Modul (DIN 53 457) | 13.000 N/mm² |
| Schlagzähigkeit (ISO/R 180) | 18 KJ/m² |

Beispiel 2

Rezeptur

| Polyphenylensulfid gemäß Beispiel 1 | 47,5 Gew.-% |
|---|---|
| Leitruß Cabot Vulcan XC 72® | 10,0 Gew.-% |
| Graphit (Fa. Merck) | 5,0 Gew.-% |
| Glasfasern | 22,5 Gew.-% |
| Glimmer | 15,0 Gew.-% |

Die genannten Ausgangsstoffe werden wie im Beispiel 1 angegeben compoundiert.
Die aus dieser Abmischung hergestellten Formkörper haben folgende

elektrische Kennwerte

| spezifischer Oberflächenwiderstand (nach DIN 53 596, VDE 0303 Teil 3, Potentialmeßverfahren) spezifischer Durchgangswiderstand (nach DIN 53 596, VDE 0303 Teil 3, Potentialmeßverfahren) | $9,1 \bullet 10^4$ Ohm |
|---|---|

Beispiel 3

Der im Beispiel 1 hergestellte Compound wurde mit einem gesondert hergestellten Compound aus 55 Gew.-% PPS und 45 Gew.-% Glasfasern vermischt im Verhältnis 1:2 und zu Formkörpern verarbeitet. Die Formkörper hatten folgende Zusammensetzung:

| Polyphenylensulfid | 49,0 Gew.-% |
|---|---|
| Leitruß Cabot Vulca XC 72® | 8,0 Gew.-% |
| Graphit (Fa. Merck) | 4,0 Gew.-% |
| Glasfasern | 27,0 Gew.-% |
| Glimmer | 12,0 Gew.-% |

An den Formkörpern wurde ein folgender spezifischer Oberflächenwiderstand von $10^8$ Ohm ermittelt (nach DIN 53 596, VDE 0303 Teil 3, Widerstand zwischen den Stöpseln).

**Ansprüche**

1. Leitfähige Abmischungen aus
a) 20 bis 92 Gew.-% Polyarylensulfiden, vorzugsweise PPS,
b) 4 bis 60 Gew.-% Leitruß,

4

c) 4 bis 60 Gew.-% Graphit,

wobei die Summe der Gewichtsprozente der Komponenten a) + b) + c) jeweils 100 Gew.-% ist und gegebenenfalls 0,01 bis 150 Gew.-% weiterer üblicher Füll- und Zusatzstoffe, bezogen auf das Gewicht der Summer der Komponenten a + b + c.

2. Mischungen nach Anspruch 1, dadurch gekennzeichnet, daß als Polyarylensulfide Polyphenylensulfid eingesetzt wird.

3. Abmischungen nach Anspruch 1, dadurch gekennzeichnet, daß sie 0,01 bis 150 Gew.-% Füll- und Verstärkungsstoffe enthalten.

4. Verwendung der Mischungen nach Anspruch 1 zur Herstellung von Formkörpern.

5. Mischungen nach Anspruch 1, dadurch gekennzeichnet, daß die daraus hergestellten Produkte spezifische Oberflächenwiderstände kleiner 50 Ohm und spezifische Durchgangswiderstände kleiner 5 Ohm•cm aufweisen.

6. Mischungen nach Anspruch 1, dadurch gekennzeichnet, daß daraus hergestellte Formkörper Leitfähigkeiten von 0,125 Sm/mm$^2$ erreichen.

7. Verwendung der Formkörper nach Anspruch 4 zur Abschirmung elektromagnetischer Wellen.

8. Verwendung von Formkörpern nach Anspruch 4 für Heizzwecke.